# EUROPÄISCHE PATENTSCHRIFT

(11) **EP 1 368 639 B1**
(45) Veröffentlichungstag und Bekanntmachung des Hinweises auf die Patenterteilung: **11.10.2006**
(21) Anmeldenummer: 02735140.2
(22) Anmeldetag: 18.03.2002
(51) Int. Cl.: G01N 21/64, G01N 33/50, G01N 33/15

(54) **VORRICHTUNG UND VERFAHREN ZUR AUTOMATISCHEN ERZEUGUNG EINER WÄRMEVERMEIDUNGSREAKTION VON NEMATODEN**
DEVICE AND METHOD FOR AUTOMATICALLY PRODUCING A THERMAL RECOIL RESPONSE IN NEMATODES
DISPOSITIF ET PROCEDE POUR LA PRODUCTION AUTOMATIQUE D'UNE REACTION D'EVITEMENT DE CHALEUR CHEZ LES NEMATODES

(30) Priorität: 16.03.2001 DE 10112798
(43) Veröffentlichungstag der Anmeldung: 10.12.2003
(73) Patentinhaber: NemaRx Pharmaceuticals Inc., Calgary AB T2L 2K8 (CA)
(72) Erfinder: TOVAR, Karlheinz, 55234 Erbes-Büdesheim (DE); WEIDNER, Gerhard, 82131 Gauting (DE); BRAUNGART, Evelyn, 81827 München (DE)
(74) Vertreter: Beyer, Andreas
(86) Internationale Anmeldenummer: PCT/EP2002/002976
(87) Internationale Veröffentlichungsnummer: WO 2002/075293

(56) Entgegenhaltungen:
- EP-A- 0 935 132
- DE-A- 19 924 929
- GB-A- 2 231 958
- US-A- 5 480 804

## Beschreibung

Die vorliegende Erfindung betrifft eine Vorrichtung und ein Verfahren zum automatischen Erzeugen einer Wärmevermeidungsreaktion von Nematoden.

Es ist bekannt, beispielsweise aus der DE 199 24 929 A1, dass bestimmte niedere Lebewesen, insbesondere Nematoden (Fadenwürmer), sich gut dazu eignen, die Wirkung pharmakologischer Substanzen, insbesondere schmerzauslösender und schmerzdämpfender Substanzen, zu testen. Von Interesse ist in diesem Zusammenhang, dass die Ergebnisse solcher an Nematoden durchgeführter Tests sich relativ gut auf höhere Lebewesen und insbesondere auf den Menschen übertragen lassen. Zur Durchführung solcher Tests wird auf die Nematoden ein Wärmereiz aufgebracht, der beim Nematoden zu einem Rückzugsreflex führt. Wenn die Nematoden einer zu untersuchenden pharmakologisch wirksamen Substanz ausgesetzt worden sind, unterscheidet sich ihre Wärmevermeidungsreaktion vom normalen Reflexverhalten solcher Nematoden, die nicht der zu untersuchenden Substanz ausgesetzt waren. Mit anderen Worten, in Abhängigkeit der von einem Nematoden als Antwort auf einen Wärmereiz ausgeführten Wärmevermeidungsreaktion läßt sich eine Aussage darüber treffen, ob eine zu testende pharmakologische Substanz eine gewünschte Wirkung hat oder nicht. Üblicherweise werden Nematoden der Gattung *Caenorhabditis* und insbesondere *Caenorhabditis* elegans sowie deren Mutanten für die genannten Untersuchungen verwendet.

Um solche Untersuchungen schnell und wirtschaftlich durchführen zu können, werden eine automatisierte Vorrichtung und ein automatisiertes Verfahren zur Erzeugung einer Wärmevermeidungsreaktion benötigt. Der Erfindung liegt die Aufgabe zugrunde, eine solche Vorrichtung und ein solches Verfahren bereitzustellen.

Diese Aufgabe ist erfindungsgemäß mit einer Vorrichtung gelöst, die die im Patentanspruch 1 angegebenen Merkmale aufweist. Sie umfasst demnach eine Auflage zur Abstützung einer oder mehrerer Probengefäße, die zur Aufnahme von zu untersuchenden Nematoden dienen. Man hat festgestellt, dass der Schwanzbereich und insbesondere der Kopfbereich von Nematoden besonders empfindlich auf einen Wärmereiz reagiert, weshalb mittels der erfindungsgemäßen Vorrichtung vorzugsweise der Schwanzbereich und/oder der Kopfbereich der zu untersuchenden Nematoden einem definierten Wärmereiz ausgesetzt werden. In einer Ausführungsform sind Kopfbereich und/oder Schwanzbereich der zu untersuchenden Nematoden mittels Fluoreszenzfärbung markiert.

Die erfindungsgemäße Vorrichtung umfasst des weiteren einen vorzugsweise Infrarotlicht emittierenden Laser zur Erzeugung des auf die Nematoden aufzubringenden Wärmereizes, eine Einrichtung zur wahlweisen Unterbrechung des Laserstrahles zur Regulierung der Dauer des Laserimpulses sowie einen Scanner, der im Strahlengang des Lasers angeordnet ist und zur Projektion und Fokussierung des emittierten Laserstrahls auf zumindest den Bereich eines Probengefäßes auf der Auflage sowie zur gesteuerten Ablenkung des emittierten Laserstrahls innerhalb dieses Bereiches dient. Vorhanden ist ferner eine Lichtquelle, vorzugsweise bestehend aus einem roten Diodenarray, die zumindest das zu untersuchende gegebenenfalls durchsichtige Probengefäß mit Licht be- oder durchstrahlt, welches zur Kontrastierung der im Probengefäß befindlichen Nematoden dient. Lichtquellen anderer Wellenlänge können ebenfalls sowohl als Auflicht als auch als Durchlicht eingesetzt werden. Die Lichtquelle kann beispielsweise eine Kaltlichtquelle sein, die Licht einer bestimmten Wellenlänge ausstrahlt, welches z.B. fluoreszenzmarkierte Bereiche der zu untersuchenden Nematoden zur Fluoreszenz anregt.

Im Strahlengang des Lasers befindet sich ein Strahlteiler, der das emittierte Laserlicht von dem zur Kontrastierung der Nematoden oder zur Fluoreszenzmarkierung bestimmter Bereiche der Nematoden eingesetzten Licht trennt. Mittels einer mit diesem Strahlteiler zusammenwirkenden elektronischen Kamera, die für das zur Kontrastierung der Nematoden oder das zur Fluoreszenzmarkierung bestimmter Bereiche der Nematoden eingesetzte Licht empfindlich ist, und einer mit der elektronischen Kamera verbundenen Echtzeit-Bildverarbeitungseinrichtung, die die jeweilige Position aller im Probengefäß befindlicher Nematoden ermittelt, stellt die erfindungsgemäße Vorrichtung fortwährend fest, wo sich die Nematoden befinden. Auf der Basis dieser Informationen richtet eine Steuerung, die mit der Bildverarbeitungseinrichtung, dem Laser, der Einrichtung zur wahlweisen Unterbrechung des Laserstrahles und dem Scanner verbunden ist, den Strahlengang des Lasers unter Zuhilfenahme des Scanners nacheinander auf unterschiedliche, im Probengefäß befindliche Nematoden aus und steuert die Einrichtung zur wahlweisen Unterbrechung des Laserstrahles jeweils zur Emission eines Laserstrahls an, nachdem der Laserstrahlengang auf einen Nematoden ausgerichtet worden ist. Auf diese Weise läßt sich auf alle im Probengefäß befindlichen Nematoden, beispielsweise also auf alle Nematodenköpfe, automatisiert ein Wärmereiz aufbringen.

Ist der Laser ein Infrarotlicht emittierender Laser, dann ist der Strahlteiler vorzugsweise für das emittierte Laserlicht undurchlässig und für das zur Kontrastierung der Nematoden oder das zur Fluoreszenzmarkierung bestimmter Bereiche der Nematoden eingesetzte Licht durchlässig. Die elektronische Kamera ist dabei vorzugweise hinter (bezogen auf die Strahlrichtung des von den Nematoden kommenden Lichtes) dem Strahlteiler angeordnet.

Bei einer bevorzugten Ausführungsform der erfindungsgemäßen Vorrichtung ist der Laser ein Nd:YAG-Laser mit einer Wellenlänge von 1.064 nm. Laser mit einer anderen Wellenlänge können ebenfalls verwendet werden, wobei dann gegebenenfalls der Strahlteiler im Strahlengang des Lasers angepasst werden muss. Abhängig von der Wellenlänge des eingesetzten Laserlichtes kann eventuell ein Strahlteiler vorteilhafter sein, der für das emittierte Laserlicht durchlässig ist und der das zur Kontrastierung der Nematoden oder das zur Fluoreszenzmarkierung bestimmter Bereiche der Nematoden eingesetzte Licht aus dem Strahlengang des Lasers zur elektronischen Kamera herausspiegelt.

Unabhängig von der Art des verwendeten Lasers ist bei bestimmten Ausführungsformen der erfindungsgemäßen Vorrichtung zwischen dem Strahlteiler und der elektronischen Kamera ein Filter angeordnet. Bei einer Ausführungsform, bei der bevorzugt bestimmte Bereiche der Nematoden mit Fluoreszenzfärbung markiert sind, wird ein Filter verwendet, der bevorzugt für das Licht durchlässig ist, das von den fluoreszenzmarkierten Bereichen der Nematoden emittiert wird, insbesondere für Licht mit einer Wellenlänge von 509 nm. Diese Wellenlänge entspricht dem von den Nematoden emittierten Fluoreszenzlicht. Der Filter sorgt somit dafür, dass kein (störendes) Licht anderer Wellenlänge, insbesondere nicht das zur Fluoreszenzanregung verwendete Licht, von der elektronischen Kamera wahrgenommen wird.

Vorzugsweise befindet sich der verwendete Laser im kontinuierlichen Betrieb und ist in seiner Leistung stufenlos regelbar, um die Intensität des aufzubringenden Wärmereizes unterschiedlichen Bedingungen anpassen zu können. Geeignet sind beispielsweise Laser mit einer maximalen Ausgangsleistung im Bereich von 50 mW bis 1000 mW.

Die vom Laser im zu untersuchenden gegebenenfalls durchsichtigen Probengefäß bestrahlte Fläche sollte einen Durchmesser im Bereich von etwa 50 *µ*m bis etwa 200 *µ*m haben und hat bei einer bevorzugten Ausführungsform der erfindungsgemäßen Vorrichtung einen Durchmesser von 150 *µ*m. Je nach verwendetem Laser, Scanner und Scannerobjektiv kann es erforderlich sein, im Strahlengang des Lasers einen Strahlaufweiter anzuordnen, um im Probengefäß einen Laserfleck des gewünschten Durchmessers von beispielsweise 150 *µ*m erzeugen zu können.

Zur Regulierung der Zeitspanne, innerhalb derer der Laserstrahl auf das Zielobjekt einwirkt (Impulsdauer), befindet sich insbesondere zwischen einem in kontinuierlichem Betrieb arbeitenden Laser und dem Strahlteiler ein Shutter. Ein Shutter ist eine elektromechanische Einrichtung, welche sich im Strahlengang eines Lasers befindet. Diese Einrichtung erlaubt die wahlweise Unterbrechung oder Öffnung des Strahlenganges des Lasers für einen definierten Zeitraum und dient somit bei einem kontinuierlich arbeitenden Laser der Regulierung der Impulsdauer des Laserstrahles. Der Shutter ist mit einer Steuerung verbunden, über die der Shutter ein elektrisches Signal erhält, das zum Öffnen oder Schließen eines elektromechanisch betätigten Verschlusses im Strahlengang des Lasers führt. Vorzugsweise ist der Shutter über die Steuerung mit der Bildverarbeitungssoftware verbunden. Die Öffnungszeit des Shutters ist stufenlos regelbar und hat bei einer bevorzugten Ausführungsform der erfindungsgemäßen Vorrichtung eine Dauer von 0,01 bis 3 Sekunden, vorzugsweise eine Dauer von 0,3 bis 1 Sekunden.

Der Scanner ist vorzugsweise ein sogenannter Galvanometer-Scanner mit beweglichen Scannerspiegeln und einem sogenannten F-Theta-Objektiv.

Zur Steigerung des Automatisierungsgrades der erfindungsgemäßen Vorrichtung ist die Auflage, auf der sich das zu untersuchende oder die zu untersuchenden Probengefäße befinden, vorzugsweise als Motortisch ausgeführt, der zumindest in x- und y- Richtung, und zur Fokussierung der Objektebene gegebenenfalls auch in z-Richtung verfahrbar ist. Ein solcher Motortisch läßt sich mit der genannten Steuerung koppeln, so dass dann, wenn alle Nematoden in einem Probengefäß mit Laserlicht "beschossen" worden sind, der Motortisch automatisch verfahren werden kann, um das nächste Probengefäß unter dem vom Scanner abgedeckten Bereich der Vorrichtung zu positionieren.

Die Bildverarbeitungseinrichtung der erfindungsgemäßen Vorrichtung ist vorzugsweise so ausgestaltet, dass sie fortwährend jeweils den Objektumriss und/oder den Mittelpunkt und/oder mindestens einen Endpunkt der im Probengefäß befindlichen Nematoden berechnet. In einer anderen Ausführungsform wird der (Flächen-) Schwerpunkt jedes der im aktuell untersuchten Probengefäß vorhandenen fluoreszenzmarkierten Bereiche einzelner Nematoden berechnet. Falls gewünscht, lässt sich aus dem Objektumriss auch der Flächenschwerpunkt des abgebildeten Nematoden berechnen. Die Koordinaten der ermittelten Objektumrisse und/oder Mittelpunkte und/oder Endpunkte und/oder Flächenschwerpunkte werden ständig der Steuerung übermittelt, vorzugsweise als Vektorkoordinaten, und können darüber hinaus dokumentiert werden, um eine spätere Auswertung der Testergebnisse zu erleichtern.

Gemäß einer bevorzugten Weiterbildung der erfindungsgemäßen Vorrichtung ist eine weitere Kamera vorhanden, die für das vom Laser emittierte Infrarotlicht empfindlich ist und die fortwährend Bilder des aktuell untersuchten Probengefäßes aufnimmt, die ebenfalls dokumentiert werden können. Mittels dieser weiteren Kamera kann festgestellt werden, ob der emittierte Laserstrahl den anvisierten und gegebenenfalls fluoreszenzmarkierten Bereich eines Nematoden tatsächlich getroffen hat oder nicht. Des weiteren lassen sich mit dieser weiteren Kamera die Wärmevermeidungsreaktionen der Nematoden kontrollieren. Wenn die von dieser weiteren Kamera aufgenommenen Bilder dokumentiert worden sind, läßt sich auch nach Durchführung eines Versuches noch feststellen, ob der Versuch ordnungsgemäß verlaufen ist oder nicht.

Um konstante Versuchsbedingungen zu gewährleisten, befindet sich die erfindungsgemäße Vorrichtung in einer Umgebung, in der die Temperatur, beispielsweise mit einem Heiz-/Kühlgerät, konstant auf eine Temperatur im Bereich von 10°C bis 30°C, vorzugsweise auf 15°C bis 25°C, eingestellt ist. Die relative Luftfeuchtigkeit der Umgebung wird, beispielsweise mit einem Luftbefeuchter, auf einen Wert von 40% bis 70%, vorzugsweise auf 50% bis 60% eingestellt.

Die eingangs genannte, der Erfindung zugrundeliegende Aufgabe ist auch durch ein Verfahren zur automatischen Erzeugung eines Wärmevermeidungsreaktion von Nematoden gelöst, das die im Patentanspruch 19 angegebenen Schritte umfasst. Bei einer Ausführungsform werden die Körperumrisse der Nematoden durch ein Kantendetektionsverfahren ermittelt. Basierend auf den damit erhaltenen Informationen für den Objektumriss werden der Schwerpunkt und/oder mindestens ein Endpunkt berechnet und die Positionskoordinaten dieser für ein Objekt spezifischen Punkte ermittelt. Durch Vergleich der Veränderung der Positionskoordinaten in aufeinanderfolgenden Kamerabildern lässt sich die Position des Kopfes der sich überwiegend vorwärtsbewegenden Nematoden ermitteln. Bei einer weiteren Ausführungsform werden zunächst aus dem Kamerabild diejenigen Bildpunkte als Bestandteile relevanter Objekte definiert, die innerhalb bestimmter Farbwert- oder Grauwert-Schwellwerte liegen. Die Schwellwerte werden so kalibriert, dass sie die Art der optischen Wiedergabe der Nematoden optimal berücksichtigen. In einem nächsten Schritt werden zusammenhängende Bildpunkte als relevante Objekte definiert, die innerhalb bestimmter Größen-Schwellwerte liegen. In einem weiteren Schritt werden die resultierenden Objekte durch ein Skelettierungsverfahren auf eine einen Bildpunkt breite Linie reduziert. Im folgenden Schritt wird von den einzelnen Linien deren Mittelpunkt und/oder mindestens ein Endpunkt bestimmt und die Positionskoordinaten dieser für ein Objekt spezifischen Punkte ermittelt. Durch Vergleich der Veränderung der Positionskoordinaten in aufeinaderfolgenden Kamerabildern lässt sich die Position des Kopfes der sich überwiegend vorwärtsbewegenden Nematoden ermitteln. In einer weiteren Ausführungsform werden Fluoreszenzlicht aussendende Bereiche der Nematoden mittels einer elektronischen Kamera fortwährend beobachtet, es wird der Flächenschwerpunkt jedes fluoreszenzmarkierten Bereiches fortwährend berechnet und die sich daraus ergebenden Schwerpunktskoordinaten werden an eine Steuerung eines Scanners übergeben.

Auf der Basis der an die Steuerung übergebenen Koordinaten wird ein Laserstrahl, vorzugsweise ein Infrarot-Laserstrahl, mittels des Scanners auf einen ersten ausgewählten Kopf- oder Schwanzbereich eines Nematoden geleitet, danach auf einen zweiten Nematoden, und dann auf einen dritten Nematoden und so fort, bis alle Nematoden einer zu untersuchenden Einheit, beispielsweise eines Probengefäßes, abgearbeitet sind.

Gemäß einer bevorzugten Ausgestaltung des erfindungsgemäßen Verfahrens wird zunächst lediglich der Strahlengang des Infrarot-Laserstrahles auf den ersten ausgewählten Nematoden ausgerichtet, und der (Infrarot-)Laserstrahl wird - ausgelöst durch die Steuerung - erst dann ausgesandt, wenn der Strahlengang des Laserstrahles auf den Kopf- oder Schwanzbereich eines ausgewählten Nematoden ausgerichtet ist. Auf diese Weise wird der Laser nur dann benutzt, wenn er wirklich zur Erzeugung eines Wärmereizes gebraucht wird.

Um die Bildverarbeitung zu erleichtern und immer eine korrekte Zuordnung der berechneten Koordinaten für Objektumrisse bzw. Endpunkte bzw. Mittelpunkte bzw. Flächenschwerpunkte sicherzustellen, wird vorzugsweise der Strahlengang des Laserstrahles vor jeder Ausrichtung auf einen Nematodenbereich auf eine Referenzposition ausgerichtet. Von dieser Referenzposition aus erfolgt dann die Ansteuerung des ausgewählten Nematoden. Gemäß einer anderen Ausführungsform wird der Strahlengang des Laserstrahles zunächst auf eine Referenzposition ausgerichtet und dann nacheinander auf mehrere ausgewählte Nematoden. Die Referenzposition kann in beiden Fällen beispielsweise die Bildmitte des von der elektronischen Kamera beobachteten Bildfeldes sein.

Obwohl für die erfindungsgemäße Vorrichtung und das erfindungsgemäße Verfahren vorzugsweise ein Infrarot-Laser verwendet wird, ist prinzipiell jedoch jeder Laser geeignet, der die Erzeugung eines Wärmereizes ermöglicht, die bei den zu untersuchenden Nematoden eine Wärmevermeidungsreaktion hervorruft.

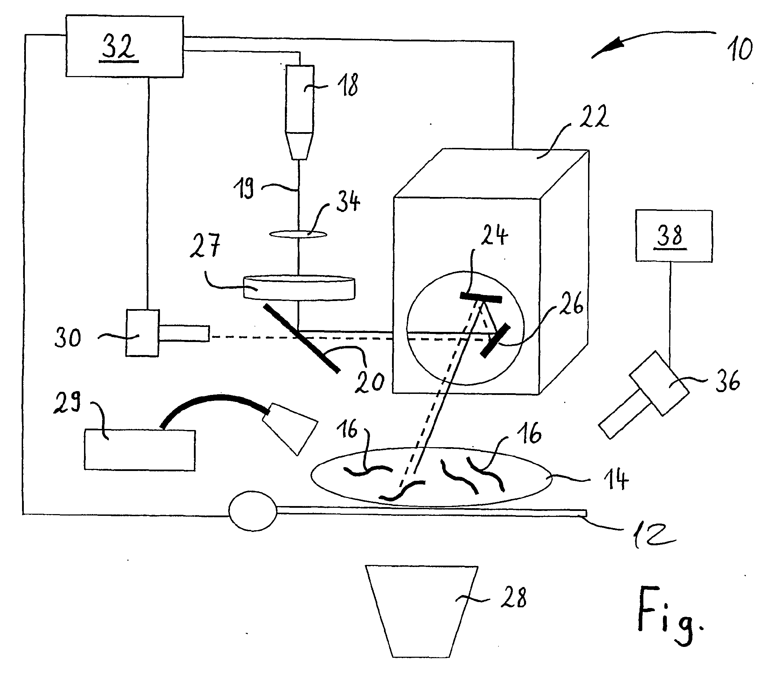

Im folgenden wird ein bevorzugtes Ausführungsbeispiel einer erfindungsgemäßen Vorrichtung anhand der beigefügten, einzigen Figur näher erläutert.

Die Figur zeigt eine insgesamt mit 10 bezeichnete Vorrichtung zum automatischen Erzeugen einer Wärmevermeidungsreaktion von Nematoden. Die Vorrichtung 10 weist eine Auflage 12 zur Abstützung mehrerer Probengefäße 14 auf, von denen in der Figur nur eines wiedergegeben ist. Im gezeigten Ausführungsbeispiel ist die Auflage 12 als ein in x-, y- und z-Richtung verfahrbarer Motortisch ausgestaltet.

In dem Probengefäß 14, das beispielsweise eine Agarschale sein kann, befinden sich die zu untersuchenden Nematoden 16, üblicherweise etwa 5 bis 15 Stück pro Probengefäß (in der Figur sind lediglich vier Nematoden 16 dargestellt). Der interessierende Bereich eines jeden Nematoden, beispielsweise der sehr wärmesensitive Kopfbereich, kann mittels eines Fluoreszenzmittels markiert sein.

Zur Erzeugung eines Wärmereizes, der zum Hervorrufen einer Wärmevermeidungsreaktion der Nematoden notwendig ist, dient ein Laser 18, der im vorliegenden Ausführungsbeispiel ein diodengepumpter Nd:YAG-Festkörperlaser mit einer Wellenlänge mit 1.064 nm und einer maximalen Ausgangsleistung von 300 mW ist. Die Ausgangsleistung des kontinuierlich betriebenen Lasers 18 ist stufenlos zwischen 0 und 100 % regelbar. Der von Laser 18 emittierte Infrarotlicht-Laserstrahl 19 wird dann über einen Strahlteiler 20 einem Galvanometer-Scanner 22 mit beweglichen silberbeschichteten Scannerspiegeln 24, 26 zugeführt, wenn ein zwischen Laser und Strahlteiler befindlicher Shutter 27 geöffnet ist. Die Öffnungszeit pro Laserimpuls ist stufenlos zwischen 0,01 Sekunden und 3 Sekunden regulierbar. Die Scannerspiegel 24, 26 können den emittierten Laserstrahl 19, der in der Figur mit einer durchgezogenen Linie wiedergegeben ist, an eine gewünschte Stelle im Probengefäß 14 lenken.

Eine Lichtquelle 28, die hier als rotes Diodenarray ausgeführt ist, durchstrahlt das zu untersuchende Probengefäß 14 mit Licht, welches die darin befindlichen Nematoden kontrastiert. Zusätzlich kann eine Lichtquelle 29, die hier als Kaltlichtquelle mit einer Wellenlänge von 480 nm ausgeführt ist, das zu untersuchende Probengefäß mit Licht durchstrahlen, welches die im Probengefäß befindlichen fluoreszenzmarkierten Bereiche der Nematoden zur Fluoreszenz anregt. Im vorliegenden Beispiel geben die fluoreszenzmarkierten Bereiche der so bestrahlten Nematoden Fluoreszenzlicht mit einer Wellenlänge von 509 nm ab.

Das von der Objektebene, in der sich die Nematoden 16 befinden, ausgehende Licht, in der Figur dargestellt durch eine gestrichelte Linie, wird über die Scannerspiegel 24, 26 zum Strahlteiler 20 reflektiert, der für Licht dieser Wellenlänge durchlässig ist, für das vom Laser 18 emittierte Infrarotlicht hingegen undurchlässig. Eine bezogen auf die Richtung des ausgesandten Lichtes hinter dem Strahlteiler 20 angeordnete elektronische Kamera 30, hier eine CMOS-Kamera, ist für dieses Licht empfindlich. Zwischen der elektronischen Kamera 30 und dem Strahlteiler 20 ist ein in der Figur nicht dargestellter Filter angeordnet, der für das Licht durchlässig ist, das von den fluoreszenzmarkierten Bereichen der Nematoden 16 emittiert wird. Im vorliegenden Beispiel ist der Filter als Langpaßfilter ausgeführt, der für Licht mit einer Wellenlänge kleiner als 509 nm undurchlässig ist. Die Kamera 30 sieht auf diese Weise nur die fluoreszenzmarkierten Bereiche der Nematoden 16 und nicht das zur Fluoreszenzanregung verwendete Licht.

Das fortwährend von der Kamera 30 aufgenommene Bild wird einer Echtzeit-Bildverarbeitungseinrichtung zugeführt, die in eine Steuerung 32 integriert und mit dieser verbunden ist. Die Bildverarbeitungseinrichtung ermittelt auf der Basis der ihr übermittelten Bilder fortwährend die jeweilige Position aller Nematoden, indem sie den Objektumriss und/oder den Mittelpunkt und/oder mindestens einen der Endpunkte und/oder den Schwerpunkt der einzelnen erkannten Objekte berechnet. Die Koordinaten aller errechneten Objektumrisse, Schwer- bzw. Mittel- bzw. Endpunkte werden als Vektorkoordinaten der Steuerung 32 zugeleitet.

Die Steuerung 32, die des weiteren mit dem Laser 18, dem Shutter 27 und dem Scanner 22 verbunden ist, kann somit basierend auf den ihr zur Verfügung stehenden Daten den Strahlengang des Lasers 18 durch entsprechende Bewegung der Scannerspiegel 24, 26 nacheinander auf unterschiedliche Nematoden im Probengefäß 14 ausrichten. Immer dann, wenn der Strahlengang des Lasers 18 auf einen ausgewählten Nematoden ausgerichtet worden ist, schickt die Steuerung 32 ein Signal an den Shutter 27, der darauf hin einen Laserstrahl emittiert, der beim Auftreffen auf den anvisierten Bereich eines Nematoden 16 einen Wärmereiz auslöst. Auf diese Weise werden nacheinander alle Nematoden im Probengefäß 14 mit Laserlicht "beschossen". Vor jedem "Schuß" fährt der Strahlengang des Lasers 18 eine Referenzstellung an, die im beschriebenen Ausführungsbeispiel die Bildmitte des von der elektronischen Kamera 30 beobachteten Bildfeldes ist.

Nachdem alle Nematoden eines Probengefäßes 14 mit Laserlicht beschossen worden sind, steuert die Steuerung 32 den als Auflage 12 dienenden Motortisch so an, dass er ein anderes Probengefäß in die Scanposition fährt. Die einzelnen Probengefäße können beispielsweise in einer Reihe oder auch in mehreren nebeneinander angeordneten Reihen vorhanden sein.

Damit im jeweils zu untersuchenden Probengefäß 14 ein ausreichend großer Laserlichtfleck entsteht - im beschriebenen Ausführungsbeispiel hat dieser Laserlichtfleck einen Durchmesser von 150 *µ*m - muß ggf. im Strahlengang des Lasers 18 ein Strahlaufweiter 34 angeordnet werden.

Um den Erfolg des Laserlichtbeschusses kontrollieren zu können, d.h. um besser feststellen zu können, ob der Laserstrahl tatsächlich den anvisierten Bereich eines Nematoden getroffen hat und anschließend zu einer Wärmevermeidungsreaktion geführt hat, umfasst die Vorrichtung 10 eine weitere Kamera 36, die für das vom Laser 18 emittierte Infrarotlicht empfindlich ist und vorzugsweise ebenfalls eine elektronische CMOS-Kamera ist. Diese Kamera 36 beobachtet fortwährend den Bereich des aktuell untersuchten Probengefäßes 14 und speichert die von ihr aufgenommenen Bilder in einer Dokumentationseinrichtung 38 ab, die beispielsweise eine Computer-Festplatte, ein Videorekorder oder ein DVD-Aufzeichnungsgerät ist.

## Patentansprüche

1. Vorrichtung (10) zur automatischen Erzeugung einer Wärmevermeidungsreaktion von Nematoden, insbesondere zum Testen pharmakologischer Substanzen, mit
- einer Auflage (12) zur Abstützung einer oder mehrerer Probengefäße (14), die zur Aufnahme zu untersuchender Nematoden (16) dienen,
- einem Laser (18),
- einer Einrichtung zur wahlweisen Unterbrechung des Laserstrahles,
- einem Scanner (22) im Strahlengang des Lasers zur Projektion und Fokussierung des emittierten Laserstrahls (19) auf zumindest den Bereich eines Probengefäßes (14) auf der Auflage (12) und zur gesteuerten Ablenkung des emittierten Laserstrahls (19) in diesem Bereich,
- einer Lichtquelle (28), die das zu untersuchende Probengefäß (14) mit Licht bestrahlt, welches zur Kontrastierung von im Probengefäß befindlichen Nematoden dient,
- und/oder einer Lichtquelle (29), die das zu untersuchende Probengefäß (14) mit Licht bestrahlt, welches fluoreszenzmarkierte Bereiche der Nematoden zur Fluoreszenz anregt,
- einem Strahlteiler (20) im Strahlengang des Lasers (18), der das emittierte Laserlicht von dem zur Kontrastierung der Nematoden verwendeten Licht und/oder von dem von den fluoreszenzmarkierten Bereichen der Nematoden emittierten Fluoreszenzlicht trennt,
- einer mit dem Strahlteiler (20) zusammenwirkenden elektronischen Kamera (30), die für das von den Nematoden kommende Licht empfindlich ist,
- einer mit der elektronischen Kamera (30) verbundenen Echtzeit-Bildverarbeitungseinrichtung, die die jeweilige Position aller Nematoden ermittelt, und
- einer mit der Bildverarbeitungseinrichtung, dem Laser (18), der Einrichtung zur wahlweisen Unterbrechung des Laserstrahles und dem Scanner (22) verbundenen Steuerung (32), die mittels des Scanners (22) den Strahlengang des Lasers (18) nacheinander auf unterschiedliche Nematoden ausrichtet und die Einrichtung zur wahlweisen Unterbrechung des Laserstrahles jeweils zur Emission eines Laserstrahls ansteuert, nachdem der Laserstrahlengang auf einen für einen Laserbeschuss relevanten Bereich des Nematoden ausgerichtet worden ist.

2. Vorrichtung nach Anspruch 1,
**dadurch gekennzeichnet, dass** der Laser (18) ein Infrarotlicht emittierender Laser ist, dass der Strahlteiler (20) für das emittierte Laserlicht undurchlässig und für das von den Nematoden kommende Licht durchlässig ist, und dass die elektronische Kamera (30) hinter dem Strahlteiler (20) angeordnet ist.

3. Vorrichtung nach Anspruch 2,
**dadurch gekennzeichnet, dass** der Laser (18) ein Nd:YAG-Laser mit einer Wellenlänge von 1064 nm ist.

4. Vorrichtung nach einem der Ansprüche 1 bis 3,
**dadurch gekennzeichnet, dass** zwischen dem Strahlteiler (20) und der elektronischen Kamera (30) ein Filter angeordnet ist, der für das Licht undurchlässig ist, welches die fluoreszenzmarkierten Bereiche der Nematoden zur Fluoreszenz anregt, und der für das von den fluoreszenzmarkierten Bereichen der Nematoden emittierte Licht durchlässig ist.

5. Vorrichtung nach einem der vorhergehenden Ansprüche,
**dadurch gekennzeichnet, dass** die vom Laser (18) emittierte Leistung stufenlos regelbar ist.

6. Vorrichtung nach einem der vorhergehenden Ansprüche,
**dadurch gekennzeichnet, dass** die Einrichtung zur wahlweisen Unterbrechung des Laserstrahles ein im Strahlengang des Lasers (18) angeordneter Shutter (27) ist.

7. Vorrichtung nach Anspruch 6,
**dadurch gekennzeichnet, dass** die Öffnungszeit des Shutters (27) stufenlos regelbar ist.

8. Vorrichtung nach einem der vorhergehenden Ansprüche,
**dadurch gekennzeichnet, dass** im Strahlengang des Lasers (18) ein Strahlaufweiter (34) angeordnet ist.

9. Vorrichtung nach einem der vorhergehenden Ansprüche,
**dadurch gekennzeichnet, dass** der Scanner (22) ein Galvanometer-Scanner ist.

10. Vorrichtung nach einem der vorhergehenden Ansprüche,
**dadurch gekennzeichnet, dass** die Auflage (12) ein wenigstens in x- und y-Richtung und vorzugsweise auch in z-Richtung verfahrbarer und mit der Steuerung (32) gekoppelter Motortisch ist.

11. Vorrichtung nach Anspruch 10,
**dadurch gekennzeichnet, dass** die Steuerung (32) mittels des Motortisches ein anderes Probengefäß (14) in den vom Laser (18) bestrahlten Bereich der Auflage (12) fährt, wenn alle Nematoden im aktuell untersuchten Probengefäß (14) abgearbeitet sind.

12. Vorrichtung nach einem der vorhergehenden Ansprüche,
**dadurch gekennzeichnet, dass** die Bildverarbeitungseinrichtung ständig jeweils den Mittelpunkt und/oder mindestens einen Endpunkt jedes der im aktuell untersuchten Probengefäß (14) vorhandenen Nematoden berechnet.

13. Vorrichtung nach einem der vorhergehenden Ansprüche,
**dadurch gekennzeichnet, dass** die Bildverarbeitungseinrichtung ständig jeweils den Objektumriss jedes der im aktuell untersuchten Probengefäß (14) vorhandenen Nematoden berechnet.

14. Vorrichtung nach einem der vorhergehenden Ansprüche,
**dadurch gekennzeichnet, dass** die Bildverarbeitungseinrichtung ständig den Schwerpunkt jedes der im aktuell untersuchten Probengefäß (14) vorhandenen fluoreszenzmarkierten Bereiche berechnet.

15. Vorrichtung nach Anspruch 12, 13 oder 14,
**dadurch gekennzeichnet, dass** die Bildverarbeitungseinrichtung die berechneten Objektumrisse und/oder Mittelpunkte und/oder Endpunkte und/oder Schwerpunkte dokumentiert.

16. Vorrichtung nach einem der vorhergehenden Ansprüche,
**dadurch gekennzeichnet, dass** eine weitere Kamera (36) vorhanden ist, die für das vom Laser (18) emittierte Infrarotlicht empfindlich ist und die ständig Bilder des aktuell untersuchten Probengefäßes (14) aufnimmt.

17. Vorrichtung nach Anspruch 16,
**dadurch gekennzeichnet, dass** die von der weiteren Kamera (36) aufgenommenen Bilder dokumentiert werden.

18. Vorrichtung nach einem der vorhergehenden Ansprüche,
**dadurch gekennzeichnet, dass** eine Einrichtung zur Konstanthaltung der Temperatur und der relativen Luftfeuchtigkeit der Umgebung der Vorrichtung vorhanden ist.

19. Verfahren zur automatischen Erzeugung einer Wärmevermeidungsreaktion von Nematoden oder ähnlichen Lebewesen, mit den Schritten:
- fortwährendes Beobachten von in einem Probengefäß befindlichen Nematoden und/oder Fluoreszenzmarkieren mindestens eines Bereiches eines jeden Nematoden und fortwährendes Beobachten Fluoreszenzlicht aussendender Bereiche der Nematoden mittels einer elektronischen Kamera,
- fortwährendes Berechnen des Objektumrisses und/oder des Mittelpunktes und/oder mindestens eines Endpunktes der Nematoden und/oder des Schwerpunktes jedes fluoreszenzmarkierten Bereiches,
- Übergeben der Objektumrisskoordinaten und/oder Mittelpunktskoordinaten, und/oder Endpunktskoordinaten und/oder der Schwerpunktskoordinaten an eine Steuerung eines Scanners, und
- Leiten eines Laserstrahles, insbesondere eines Infrarot-Laserstrahles, auf der Basis der an die Steuerung übergebenen Koordinaten, auf einen ersten ausgewählten Bereich eines Nematoden mittels des Scanners, sodann auf einen zweiten ausgewählten Bereich, und dann auf einen dritten ausgewählten Bereich und so fort, bis alle ausgewählten Bereiche abgearbeitet sind.

20. Verfahren nach Anspruch 19,
**dadurch gekennzeichnet, dass** der Laserstrahl durch Öffnen eines Shutters erst dann ausgesandt wird, wenn der Strahlengang des Laserstrahles auf den ausgewählten Bereich des Nematoden ausgerichtet worden ist.

21. Verfahren nach Anspruch 19 oder 20,
**dadurch gekennzeichnet, dass** der Strahlengang des Laserstrahles zunächst auf eine Referenzposition ausgerichtet wird und dann nacheinander auf mehrere ausgewählte Bereiche des Nematoden.

22. Verfahren nach Anspruch 19 oder 20,
**dadurch gekennzeichnet, dass** der Strahlengang des Laserstrahles vor jeder Ausrichtung auf einen ausgewählten Bereich eines Nematoden auf eine Referenzposition ausgerichtet wird.

23. Verfahren nach Anspruch 21 oder 22,
**dadurch gekennzeichnet, dass** die Referenzposition die Bildmitte des von der elektronischen Kamera beobachteten Bildfeldes ist.

24. Verfahren nach einem der Ansprüche 19 bis 23,
**dadurch gekennzeichnet, dass** die an die Scannersteuerung übergebenen Objektumriß- und/oder Mittelpunkts- und/oder Endpunkts- und/oder Schwerpunktskoordinaten Vektorkoordinaten sind.

## Claims

1. An apparatus (10) for automatically generating a heat avoidance reaction by nematodes, in particular for testing pharmacological substances, having
- a base (12) for supporting one or more sample containers (14) which are used to hold nematodes (16) to be studied,
- a laser (18),
- a device for selectively interrupting the laser beam,
- a scanner (22) in the beam path of the laser for projecting and focussing the emitted laser beam (19) onto at least the region of a sample container (14) on the base (12) and for controlled deflection of the emitted laser beam (19) in this region,
- a light source (28) which illuminates the sample container (14) to be studied with light which is used for contrasting nematodes present in the container,
- and/or a light source (29) which illuminates the sample container (14) to be studied with light which stimulates fluorescently marked regions of the nematodes to fluoresce,
- a beam splitter (20) in the beam path of the laser (18), which separates the emitted laser light from the light used for contrasting the nematodes and/or from the fluorescent light emitted by the fluorescently marked regions of the nematodes,
- an electronic camera (30), cooperating with the beam splitter (20), which is sensitive to the light coming from the nematodes,
- a real-time image processing device, connected to the electronic camera (30), which determines the respective position of all the nematodes, and
- a controller (32), connected to the image processing device, the laser (18), the device for selectively interrupting the laser beam and the scanner (22), which successively aims the beam path of the laser (18) at different nematodes by means of the scanner (22) and drives the device for selectively interrupting the laser beam respectively to emit a laser beam after the laser beam path has been aimed at a relevant region of the nematode for a laser shot.

2. The apparatus according to Claim 1,
**characterized in that** the laser (18) is an infrared light-emitting laser, **in that** the beam splitter (20) is opaque for the emitted laser light and transparent for the light coming from the nematodes, and **in that** the electronic camera (30) is arranged behind the beam splitter (20).

3. The apparatus according to Claim 2,
**characterized in that** the laser (18) is an Nd:YAG laser with a wavelength of 1064 nm.

4. The apparatus according to one of Claims 1 to 3,
**characterized in that** a filter, which is opaque for the light that stimulates the fluorescently marked regions of the nematodes to fluoresce and which is transparent for the light emitted by the fluorescently marked regions of the nematodes, is arranged between the beam splitter (20) and the electronic camera (30).

5. The apparatus according to one of the preceding claims,
**characterized in that** the power emitted by the laser (18) is continuously adjustable.

6. The apparatus according to one of the preceding claims,
**characterized in that** the device for selectively interrupting the laser beam is a shutter (27) arranged in the beam path of the laser (18).

7. The apparatus according to Claim 6,
**characterized in that** the opening time of the shutter (27) is continuously adjustable.

8. The apparatus according to one of the preceding claims,
**characterized in that** a beam expander (34) is arranged in the beam path of the laser (18).

9. The apparatus according to one of the preceding claims,
**characterized in that** the scanner (22) is a galvanometer scanner.

10. The apparatus according to one of the preceding claims,
**characterized in that** the base (12) is a motorized stage movable at least in the x and y directions, and preferably also in the z direction, and coupled to the controller (32).

11. The apparatus according to Claim 10,
**characterized in that** the controller (32) brings another sample container (14) into the region of the base (12) illuminated by the laser (18) by means of the motorised stage when all the nematodes in the currently studied sample container (14) have been processed.

12. The apparatus according to one of the preceding claims,
**characterized in that** the image processing device constantly calculates respectively the midpoint and/or at least one end point of each of the nematodes present in the currently studied sample container (14).

13. The apparatus according to one of the preceding claims,
**characterized in that** the image processing device constantly calculates the object contour of each of the nematodes present in the currently studied sample container (14).

14. The apparatus according to one of the preceding claims,
**characterized in that** the image processing device constantly calculates the centroid of each of the fluorescently marked regions present in the currently studied sample container (14).

15. The apparatus according to Claim 12, 13 or 14,
**characterized in that** the image processing device documents the calculated object contours and/or midpoints and/or end points and/or centroids.

16. The apparatus according to one of the preceding claims,
**characterized in that** a further camera (36) is provided which is sensitive to the infrared light emitted by the laser (18) and which constantly records images of the currently studied sample container (14).

17. The apparatus according to Claim 16,
**characterized in that** the images recorded by the further camera (36) are documented.

18. The apparatus according to one of the preceding claims,
**characterized in that** a device is provided for keeping constant the temperature and relative humidity of the environment of the apparatus.

19. A method for automatically generating a heat avoidance reaction by nematodes or similar living beings, having the steps of:
- continually observing nematodes present in a sample container and/or fluorescently marking at least one region of each nematode and continually observing fluorescent light-emitting regions of the nematodes by means of an electronic camera,
- continually calculating the object contour and/or the midpoint and/or at least one end point of the nematodes and/or the centroid of each fluorescently marked region,
- transferring the object contour coordinates and/or the midpoint coordinates and/or the end point coordinates and/or the centroid coordinates to a controller of a scanner, and
- directing a laser beam, in particular an infrared laser beam, onto a first selected region of a nematode by means of the scanner on the basis of the coordinates transferred to the controller, subsequently onto a second selected region, and then onto a third selected region and so on, until all the selected regions have been processed.

20. The method according to Claim 19,
**characterized in that** the laser beam is emitted by opening a shutter only after the beam path of the laser beam has been aimed at the selected region of the nematode.

21. The method according to Claim 19 or 20,
**characterized in that** the beam path of the laser beam is aimed first at a reference position and then successively at a plurality of selected regions of the nematode.

22. The method according to Claim 19 or 20,
**characterized in that** the beam path of the laser beam is aimed at a reference position before each aiming at a selected region of a nematode.

23. The method according to Claim 21 or 22,
**characterized in that** the reference position is the image center of an image field observed by the electronic camera.

24. The method according to one of Claims 19 to 23,
**characterized in that** the object contour coordinates and/or midpoint coordinates and/or end point coordinates and/or centroid coordinates transferred to the scanner controller are vector coordinates.

## Revendications

1. Dispositif (10) pour la production automatique d'une réaction d'évitement de chaleur chez les nématodes, notamment afin de tester des substances pharmacologiques, comprenant
- un support (12), sur lequel sont placés un ou plusieurs récipients d'échantillon (14) servant à contenir des nématodes (16) à examiner,
- un laser (18),
- un dispositif permettant d'interrompre à volonté le faisceau laser,
- un scanner (22) placé sur la trajectoire du laser et permettant de projeter et de focaliser le faisceau laser (19) émis sur au moins une zone d'un récipient d'échantillon (14) placé sur le support (12), ainsi que de dévier de manière contrôlée vers cette zone le faisceau laser (19) émis,
- une source lumineuse (28) qui expose le récipient d'échantillon (14) à examiner à de la lumière servant à contraster les nématodes se trouvant dans ledit récipient d'échantillon (14),
- et/ou une source lumineuse (29) qui expose le récipient d'échantillon (14) à examiner à de la lumière afin d'activer la fluorescence des zones des nématodes marquées par fluorescence,
- un diviseur de faisceau (20) placé sur la trajectoire du faisceau laser (18), lequel sépare le faisceau laser émis de la lumière utilisée pour contraster les nématodes et/ou de la lumière fluorescente émises par les zones des nématodes marquées par fluorescence,
- une caméra électronique (30) coopérant avec le diviseur de faisceau (20), laquelle caméra est sensible à la lumière provenant des nématodes,
- un système de traitement d'image en temps réel, connecté à la caméra électronique (30), qui détecte la position respective de tous les nématodes, et
- une commande connectée au système de traitement d'image, au laser (18), au dispositif permettant d'interrompre à volonté le faisceau laser et au scanner (22), laquelle commande permet de diriger la trajectoire du faisceau laser (18) successivement sur différents nématodes, au moyen du scanner (22), et d'actionner le dispositif permettant d'interrompre à volonté le faisceau laser toutes les fois que devra être émis un faisceau laser, après que la trajectoire dudit faisceau laser a été dirigée sur une zone du nématode qui est pertinente pour un bombardement laser.

2. Dispositif selon la revendication 1,
**caractérisé en ce que** le laser (18) est un laser émettant dans l'infrarouge, **en ce que** le diviseur de faisceau (20) ne laisse pas passer la lumière laser émise et laisse passer la lumière provenant des nématodes, et **en ce que** la caméra électronique (30) est disposée derrière le diviseur de faisceau (20).

3. Dispositif selon la revendication 2,
**caractérisé en ce que** le laser (18) est un laser Nd:YAG ayant une longueur d'onde de 1064 nm.

4. Dispositif selon l'une des revendications 1 à 3, **caractérisé en ce qu'**il est disposé entre le diviseur de faisceau (20) et la caméra électronique (30) un filtre qui ne laisse pas passer la lumière utilisée pour activer la fluorescence des zones des nématodes marquées par fluorescence, et qui laisse passer la lumière émise par les zones des nématodes marquées par fluorescence.

5. Dispositif selon l'une des revendications précédentes, **caractérisé en ce que** la puissance émise par le laser (18) est réglable en continu.

6. Dispositif selon l'une des revendications précédentes, **caractérisé en ce que** le dispositif permettant d'interrompre à volonté le faisceau laser est un shutter (27), lequel est disposé sur la trajectoire du faisceau laser (18).

7. Dispositif selon la revendication 6,
**caractérisé en ce que** la durée d'ouverture du shutter (27) est réglable en continu.

8. Dispositif selon l'une des revendications précédentes, **caractérisé en ce qu'**un élargisseur de faisceau est disposé sur la trajectoire du faisceau laser (18).

9. Dispositif selon l'une des revendications précédentes, **caractérisé en ce que** le scanner (22) est un scanner galvanométrique.

10. Dispositif selon l'une des revendications précédentes, **caractérisé en ce que** le support (12) est une table motorisée couplée à ladite commande (32) et pouvant se déplacer pour le moins dans la direction x et y et, de préférence, également dans la direction z.

11. Dispositif selon la revendication 10,
**caractérisé en ce que** la commande (32) permet, au moyen de la table motorisée, de positionner un autre récipient d'échantillon (14) dans la zone du support (12) exposée au rayonnement laser, lorsque tous les nématodes contenus dans le récipient d'échantillon momentanément examiné ont été irradiés par rayon laser.

12. Dispositif selon l'une des revendications précédentes, **caractérisé en ce que** le système de traitement d'image calcule en permanence le point central et/ou pour le moins un point d'extrémité de chaque nématode contenu dans le récipient d'échantillon (14) momentanément examiné.

13. Dispositif selon l'une des revendications précédentes, **caractérisé en ce que** le système de traitement d'image calcule en permanence le contour de chaque nématode contenu dans le récipient d'échantillon (14) momentanément examiné.

14. Dispositif selon l'une des revendications précédentes, **caractérisé en ce que** le système de traitement d'image calcule en permanence le centre de gravité de chaque zone marquée par fluorescence et contenue dans le récipient d'échantillon (14) momentanément examiné.

15. Dispositif selon la revendication 12, 13 ou 14,
**caractérisé en ce que** le système de traitement d'image enregistre et archive les contours et/ou les points centraux et/ou les points d'extrémité et/ou les points de gravité calculés.

16. Dispositif selon l'une des revendications précédentes, **caractérisé en ce qu'**il est utilisé une caméra supplémentaire (36), laquelle est sensible à la lumière infrarouge émise par le laser (18) et saisit en permanence des images du récipient d'échantillon (14) momentanément examiné.

17. Dispositif selon la revendication 16,
**caractérisé en ce que** les images saisies par la caméra supplémentaire (36) sont documentées.

18. Dispositif selon l'une des revendications précédentes, **caractérisé en ce qu'**il est utilisé un système permettant de maintenir à un niveau constant la température et le taux d'humidité relative de l'air dans l'entourage du dispositif.

19. Procédé pour la production automatique d'une réaction d'évitement de chaleur chez les nématodes ou chez d'autres organismes similaires, comprenant pour étapes :
- l'observation continue des nématodes se trouvant dans un récipient d'échantillon et/ou le marquage par fluorescence d'au moins une zone de chaque nématode, et l'observation continue des zones des nématodes émettrices de lumière fluorescente, au moyen d'une caméra électronique,
- le calcul continu du contour et/ou du point central et/ou pour le moins d'un point d'extrémité des nématodes et/ou du centre de gravité de chaque zone marquée par fluorescence,
- la transmission à la commande d'un scanner des coordonnées relatives aux contours et/ou aux points centraux, et/ou des coordonnées relatives aux points d'extrémité et/ou aux centres de gravité, et
- le guidage d'un faisceau laser, notamment d'un faisceau laser infrarouge, sur une première, puis sur une seconde, puis sur une troisième zone d'un nématode sélectionnée, et ainsi de suite jusqu'à ce que toutes les zones sélectionnées aient été irradiées par rayonnement laser, sur la base des coordonnées transmises à ladite commande au moyen dudit scanner.

20. Procédé selon la revendication 19,
**caractérisé en ce que** le faisceau laser est émis suite à l'ouverture d'un shutter seulement après que la trajectoire du faisceau laser a été dirigée sur la zone du nématode sélectionnée.

21. Procédé selon la revendication 19 ou 20,
**caractérisé en ce que** la trajectoire du faisceau laser est dirigée tout d'abord sur une position de référence et, ensuite, successivement sur plusieurs zones du nématode sélectionnées.

22. Procédé selon la revendication 19 ou 20,
**caractérisé en ce que** la trajectoire du faisceau laser est dirigée sur une position de référence avant d'être dirigée sur une zone d'un nématode sélectionnée.

23. Procédé selon la revendication 21 ou 22,
**caractérisé en ce que** la position de référence est le centre du champ d'image observé par la caméra électronique.

24. Procédé selon l'une des revendications 19 à 23,
**caractérisé en ce que** les coordonnées relatives aux contours et/ou aux points centraux et/ou aux points d'extrémité et/ou aux centres de gravité, transmises à la commande du scanner, sont des coordonnées vectorielles.
